Europäisches Patentamt

European Patent Office

Office européen des brevets

(11) Veröffentlichungsnummer: **0 200 985 B1**

# (12) EUROPÄISCHE PATENTSCHRIFT

(45) Veröffentlichungstag der Patentschrift: **10.07.91**

(21) Anmeldenummer: **86105532.5**

(22) Anmeldetag: **22.04.86**

(51) Int. Cl.5: **G11B 5/706, C21B 13/08, F27B 7/32, C01G 49/06**

(54) **Verfahren zur Herstellung von nadelförmigen, ferrimagnetischen Gamma-Eisen(III)-Oxiden.**

(30) Priorität: **26.04.85 DE 3515085**

(43) Veröffentlichungstag der Anmeldung:
**17.12.86 Patentblatt 86/46**

(45) Bekanntmachung des Hinweises auf die
Patenterteilung:
**10.07.91 Patentblatt 91/28**

(84) Benannte Vertragsstaaten:
**DE FR GB NL**

(56) Entgegenhaltungen:
**EP-A- 0 052 741**
**US-A- 4 096 292**

(73) Patentinhaber: **BASF Aktiengesellschaft**
**Carl-Bosch-Strasse 38**
**W-6700 Ludwigshafen(DE)**

(72) Erfinder: **Ohlinger, Manfred, Dr.**
**Anselm-Feuerbach-Strasse 13**
**W-6710 Frankenthal(DE)**
Erfinder: **Vaeth, Guenter**
**Woogstrasse 35**
**W-6703 Limburgerhof(DE)**
Erfinder: **Honecker, Gerhard**
**Raiffeisenstrasse 13 a**
**W-6700 Ludwigshafen(DE)**

**Beschreibung**

Die Erfindung betrifft ein Verfahren zur Herstellung von Gamma-Eisen(III)-oxid durch Entwässerung von Eisen(III)-oxidhydroxiden zu $\alpha$-Eisen(III)-oxid und die Reduktion von letzterem zu Magnetit mit anschließender Oxidation des Magnetits zu Gamma-Eisen(III)-oxid.

Nadelförmige ferrimagnetische Eisenoxide werden seit langem als magnetisierbares Material bei der Fertigung von magnetischen Aufzeichnungsträgern eingesetzt. Es sind eine Vielzahl von Verfahren zur Herstellung des vor allem verwendeten Gamma-Eisen(III)-oxides bekannt. Ausgangsprodukte gezielt hergestellter Gamma-Eisen(III)-oxide sind fast ausschließlich $\alpha$-oder $\gamma$-Modifikationen von Eisen(III)-oxidhydroxiden, d.h. von Goethit oder Lepidokrokit, da sich diese Stoffe gezielt als nadelförmige Teilchen definierter Länge und Dicke herstellen lassen. Bei der Weiterverarbeitung entsteht aus diesen Produkten unter Wasserabspaltung zunächst $\alpha$-Eisen(III)-oxid, welches zum Magnetit reduziert und durch vorsichtige Oxidation in nadelförmiges, ferrimagnetisches Gamma-Eisen(III)-oxid umgewandelt wird.

Bei der Herstellung von Goethit oder Lepidokrokit werden durch definierte Verfahrensbedingungen Teilchenlänge und -dicke der Nadeln festgelegt. Im allgemeinen beträgt die Teilchenlänge 0,2 bis 1,0 $\mu$m bei einem Längen-/Dickenverhältnis von 5:1 bis 15:1. Durch die nachfolgenden Verfahrensschritte, vor allem durch die Entwässerung zu $\alpha$-Fe$_2$O$_3$ und die sich anschließende Reduktion zu Magnetit Fe$_3$O$_4$, soll trotz Wasserabspaltung und Volumenkontraktion, die bei dem Ausgangsprodukt eingestellte Nadelform weitgehend erhalten bleiben. Die Form der Nadeln, vor allem das Längen/Dickenverhältnis, bestimmt entscheidend die magnetischen Kenndaten. Diese und die spezifische Oberfläche sind bestimmend für die elektroakustischen Eigenschaften von magnetischen Aufzeichnungsträgern. Wichtig ist, daß $\gamma$-Eisen(III)-oxid, erhalten durch Oxidation von Magnetit, möglichst aus Einzelnadeln ohne Versinterungen besteht. Aus diesen Zusammenhängen ergibt sich, daß Art und Durchführung von Entwässerung und Reduktion besondere Bedeutung zukommen. Bislang war bekannt, daß bei einer Vorentwässerung von $\alpha$- und/oder $\gamma$-Eisenoxidhydroxiden als geeigneter Verfahrensschritt je nach Verweilzeit und Temperatursteuerung ohne Einleitung von Gasen oder bei Einleitung von Stickstoff oder Luft in einen Drehrohrofen, bevorzugt kontinuierlicher Auslegung, die entstehenden $\alpha$-Fe$_2$O$_3$-Nädelchen durch gezielte, oberflächliche Sinterung mit geringem Formverlust stabilisiert und verfestigt werden, so daß diese Nadelform bei der Reduktion zu Magnetit und anschließender Oxidation zu $\gamma$-Eisen(III)-oxid in weiteren Arbeitsgängen erhalten bleibt. wobei dann so hergestellte magnetische Eisenoxide nach Verarbeitung zu magnetischen Aufzeichnungsträgern gute Kopierdämpfungswerte und hohe Aussteuerungen bei Koerzitivfeldstärken von etwa 30 kA/m im Band aufweisen. Ein Nachteil dieser Konvertierung von Eisenoxidhydroxiden in ferromagnetisches $\gamma$-Eisen(III)-oxid wie beschrieben sind jeweils eigene Arbeitsgänge für Entwässerung/Temperung, Reduktion. Es hat nicht an Versuchen gefehlt Entwässerung und Reduktion in einem Arbeitsgang zusammenzufassen, wie dies eine Vielzahl von Verfahren beweist. So beschreibt die GB-PS 675 260 ein Verfahren zur Gewinnung von Gamma-Eisen(III)-oxid, bei welchem nadelförmiges $\alpha$-Eisenoxidhydroxid zum $\alpha$-Eisen(III)-oxid entwässert, in reduzierender Atmosphäre bei mehr als 300° C zum Magnetit umgewandelt und an Luft bei Temperaturen unterhalb von 450° C zum nadelförmigen Gamma-Eisen(III)-oxid oxidiert wird. Außerdem ist bekannt und vielfach beschrieben, daß sich ferrimagnetische Eisenoxide durch Erhitzen von Eisenoxidhydroxiden mit organischen Stoffen und gegebenenfalls zusätzlich bei Einleitung eines Inertgases oder von reduzierenden anorganischen Gasen herstellen lassen. Dabei werden die organischen Stoffe zersetzt und die Eisenoxidhydroxide zu Magnetit reduziert, wel cher selbst als magnetisches Material Verwendung finden kann aber in der Regel zum $\gamma$-Eisen(III)-oxid oxidiert wird. Bei der Zersetzung der organischen Stoffe scheidet sich teilweise Kohlenstoff auf die Oxidnadeln ab. Dieser schützt die Nadeln vor gegenseitigem Verkleben, so daß der Einzelnadelcharakter des Ausgangsproduktes gewahrt bleibt. Solche Verfahrensweisen sind beispielsweise in US-PS 2 900 236, DE-OS 20 64 804, DL-PS 91 017, DE-OS 12 03 656, DE-AS 17 71 327, DE-AS 22 12 435 beschrieben. Die organischen Stoffe können dabei zu Suspensionen von Eisenoxidhydroxiden zugemischt werden. Alternativ ist eine trockene Beimischung dieser Stoffe oder eine Zudosierung während des Einlaufes der Eisenoxidhydroxide in den Reduktionsofen mögich. Bei magnetischen Aufzeichnungsträgern, deren magnetische Schicht Eisenoxide, hergestellt aus Eisenoxidhydroxiden, bei denen Entwässerung zu $\alpha$-Fe$_2$O$_3$ und Reduktion zu Fe$_3$O$_4$ in einem Verfahrensschritt zusammengefaßt sind, enthält, sind Einbußen bei der K opierdämpfung und der Koerzitivfeldstärke zu verzeichnen.

Somit ergibt sich bei den Verfahren zur Herstellung von Gamma-Eisen(III)-oxid nach dem Stand der Technik, daß bei einer Durchführung und getrennten Verfahrensstufen für Entwässerung, Temperung, Reduktion und Oxidation sowohl der hierfür nötige große technische Aufwand als auch eine erschwert ablaufende Reduktion, dadurch verursacht, daß das Reduktionsmittel nicht unmittelbar an der Oberfläche der entstehenden $\alpha$-Fe$_2$O$_3$-Teilchen angreifen kann, von Nachteil ist. Werden andererseits die Verfahrensstufen Entwässerung und Reduktion zusammengefaßt, dann muß dies mit dem Nachteil erkauft werden, daß keine gezielte Temperung des gebildeten $\alpha$-Fe$_2$O$_3$ zur Verbesserung der Stabilität der Nadeln möglich ist. Aufgabe der vorliegenden Erfindung war es daher, ein Verfahren zur Herstellung von Gamma-Eisen(III)-oxid bereitzustellen, das die geschilderten Nachteile nicht aufweist.

Es wurde nun überraschenderweise gefunden, daß sich mit einem Verfahren zur Herstellung von nadelförmigen ferrimagnetischen Gamma-Eisen(III)-oxiden durch Entwässerung von Eisen(III)-oxidhydroxiden zu $\alpha$-Fe$_2$O$_3$, anschließender Reduktion zu Magnetit bei Temperaturen zwischen 280 und 700°C mit mindestens einem Reduktionsmittel aus der Gruppe von in diesem Temperaturbereich in Gegenwart von Eisenoxiden zersetzlichen organischen Verbindungen. Wasserstoff und Wassertoff-Inertgas-Gemischen und darauffolgender Oxidation des Magnetits bei Temperaturen zwischen 150 und 450°C mit sauerstoffhaltigen Gasen zu Gamma-Eisen(III)-oxid die gestellte Aufgabe lösen läßt, wenn die Umwandlungsreaktion des Eisen(III)-oxidhydroxids zum Magnetit in nur einem kontinuierlichen Drehrohrofen durchgeführt wird, mit der Maßgabe, daß innerhalb des Drehrohrofens eine Trennung zwischen der Entwässerungsreaktion und der Reduktionsreaktion dadurch erfolgt, daß durch ein axial verschiebbares Dosierorgan die Zugabe des Reduktionsmitte ls an einer beliebigen Stelle entlang der Achse des Drehrohrofens vorgenommen wird.

Im Rahmen des erfindungsgemäßen Verfahrens lassen sich als Eisen(III)-oxidhydroxide sowohl die $\alpha$- als auch die $\gamma$-Modifikationen (Goethit bzw. Lepidokrokit) einsetzen.

Das erfindungsgemäße Verfahren und insbesondere die Entwässerung des Eisenoxidhydroxids und die Reduktion des daraus resultierenden $\alpha$-Fe$_2$O$_3$ zum Magnetit wird in an sich bekannten kontinuierlich betriebenen Drehrohröfen durchgeführt. Bei diesen Öfen wird das Eisenoxidhydroxid auf der einen Seite zweckmäßigerweise mittels einer Förderschnecke eingebracht und nach Durchlaufen des heizbaren Ofens erneut über eine Schleuse wieder ausgetragen, wobei das Reduktionsmittel im Gleichstrom zu- und das Abgas beim Produktaustrag abgeführt wird.

Gemäß der Erfindung wird das Eisenoxidhydroxid sowie das Reduktionsmittel, bestehend aus der in Gegenwsart von Eisenoxid zersetzlichen organischen Verbindung oder dem reduzierenden Gas oder einer oder beider dieser Komponenten zusammen mit einem Inertgas im Gleichstrom eingetragen. Während jedoch das Eisenoxidhydroxid in bekannter Weise direkt am Einlauf des Drehrohrofens mittels einer Förderschnecke eingebracht wird, wird die organische Verbindung und/oder das reduzierende Gas mit Hilfe eines konzentrisch zur ersten Förderschnecke angebrachten Dosierorgans dem Drehrohrofen zugeführt. Hierbei ist es wesentlich, daß dieses Dosierorgan, auch Lanze genannt, axial verschiebbar ausgebildet ist, damit die Einwirkstelle zumindest eines Teiles des Reduktionsmittels an beliebiger Stelle entlang der Achse des Drehrohrofens ausgewählt werden kann. Einzuleitende Gase lassen sich sowohl über die Einlaufschnecke des Eisenoxidhydroxidpulvers, also bereits ab Drehrohrofeneinlauf, als auch zusammen mit dem Reduktionsmittel, üblicherweise der organischen Verbindung, durch die verschiebbare Lanze einblasen. In einer weiteren Ausgestaltung des erfindungsgemäßen Verfahrens lassen sich auch Teilmengen über beide Einförderungsmittel einleiten, beispielsweise der Inertgasstrom über die Pulvereinlaufschnecke und der Reduktionsmittelstrom über die verschiebbare Lanze. Besonders vorteilhaft ist es, bezogen auf die in den Drehrohrofen einzufördernde Eisenoxidhydroxidmenge, bis zu 6 Gew.% an organischer Verbindung übe r die Lanze einzutragen. Als organische Verbindungen werden bevorzugt langkettige Carbonsäuren, deren Ester, insbesondere Fettsäureglicerinester, höhere Alkohole, Kohlenwasserstoffe, Polymere mit einem Molekulargewicht über 3000, wie Polyethylene, Polypropylene, Polyester, Polyether, Polyamide und Polycarbonate eingesetzt. Feste Stoffe werden mittels Schnecke durch das Dosierorgan zugeführt, während flüssige oder gasförmige Medien eingedüst werden. Bei der Durchführung des Verfahrens ist es angebracht die Lanze mit einer Kühlung zu versehen. Die Einleitung der Gase, Inertgas oder reduzierendes Gas oder Inertgas und redzierendes Gas, ist über beide Beschickungseinrichtungen möglich und ist so zu bemessen, daß trotz einer Reaktion des gegebenenfalls vorhandenen reduzierenden Gases pro Volumeneinheit des durch die Entwässerung des Eisenoxidhydroxids entstehenden Wasserdampfs die ein-bis dreifache Volumenmenge dieser Gase mit dem Wasserdampfanteil ausgetragen wird.

Die für die Entwässerung und die Reduktion erforderliche Temperatur wird durch eine Heizung des Drehrohrofens aufgebracht, die so ausgelegt ist, daß der Regelbereich für die Produkttemperatur 260 bis 700°C beträgt. Vorteilhaft ist eine Unterteilung der Heizung entlang der Achse des Drehrohrofens in mehrere, bevorzugt drei bis sechs Heizzonen, welche getrennt geregelt werden können. Mit dieser Temperaturregelung kann das erfindungsgemäße Verfahren derart abgewandelt werden, daß nach der Entwässerungszone durch eine entsprechende Anordnung des Dosierorgans für das Reduktionsmittel eine dazwischenliegende Temperzone für das durch Entwässerung entstandene $\alpha$-Fe$_2$O$_3$ entsteht. Generell gilt, daß es mit dem erfindungsgemäßen Verfahren möglich ist, die durch die Eigenschaften des Magnetits bedingten speziellen Daten des resultierenden Gamma-Eisen(III)-oxids durch die Positionierung des verschiebbaren Dosierorgans im Reaktionsofen zu beeinflussen.

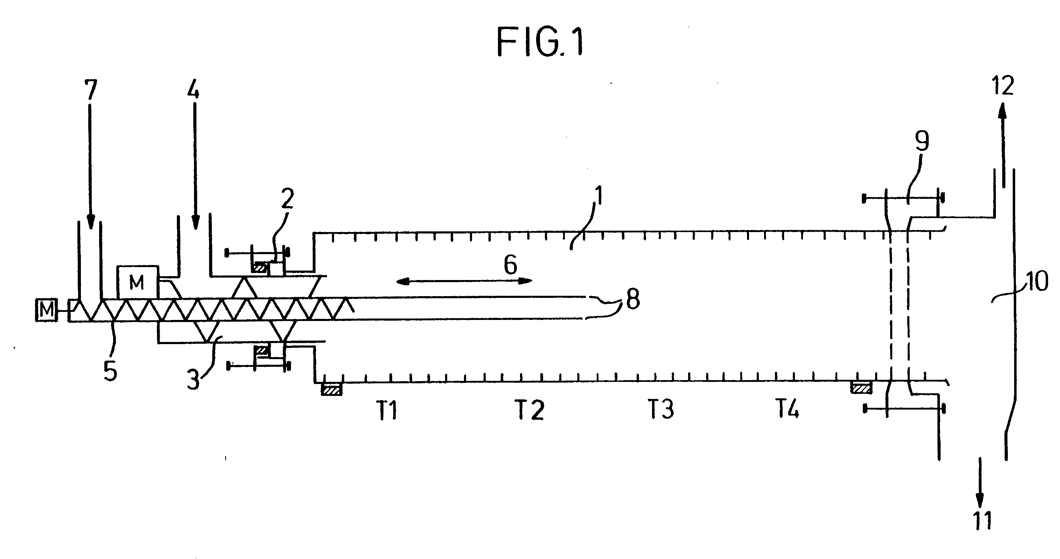

Eine für das erfindungsgemäße Verfahren einsetzbare Apparatur ist beispielhaft in Abbildung 1

3

wiedergegeben. Ein Drehrohrofen 1, der in 4 Heizzonen T1 bis T4 unterteilt ist, ist über eine Dichtung 2 mit einer Förderschnecke 3 verbunden, welche über die Zuführung 4 das Eisenoxidhydroxidpulver, gegebenenfalls zusammen mit einem Gasstrom, in den Ofen einbringt. Konzentrisch zu der Förderschnecke 3 ist in deren Achse ein Dosierorgan 5 eingebaut, das entlang der Achse 6 des Ofens verschiebbar angeordnet ist. Durch die Zuführung 7 läßt sich das Reduktionsmittel mittels der verschiebbaren Lanze 5 an der Austrittstelle 8 an einer beliebigen Stelle in den Ofen einführen. Auf der gegenüberliegenden Seite des Drehrohrofens ist durch die Dichtung 9 verbunden die Austragseinrichtung 10 angebracht, durch welche der entstandene Magnetit über eine Schleuse 11 ausgetragen und der nachfolgenden Einrichtung zur Oxidation zum Gamma-Eisen(III)-oxid zugeführt. Das entweichende Abgas kann über den Auslaß 12 abgeführt werden.

Der nach der Durchführung der beschriebenen Verfahrensschritte erhaltene Magnetit wird dann anschließend, zweckmäßigerweise auch in einem Drehrohrofen in an sich bekannter Weise mittels Überleiten sauerstoffhaltiger Gase, im allgemeinen Luft, bei 150 bis 540 $^{\circ}$C, vorzugsweise 200 bis 400 $^{\circ}$C, zu nadelförmigem ferrimagnetischen Eisenoxiden der Formel $FeO_x$ und Werten für x von größer 1,33 bis 1,50 oxidiert. Üblicherweise wird die Oxidation bis zur Stufe des Gamma-Eisen(III)-oxids geführt.

Die nach dem erfindungsgemäßen Verfahren hergestellten Gamma-Eisen(III)-oxidezeichnen sich durch einen im Vergleich zu den eingesetzten Eisenoxidhydroxiden sehr guten Erhalt der Nadelform aus. Auffällig ist dabei die mit der angestrebten Koerzitivkraftfeldstärke von 24 bis 30 kA/m im Vergleich zu einer, nach dem gegenwärtigen Stand der Technik gefertigten $\gamma$-Eisen(III)-oxiden, erhaltenen Kristallitgröße von 24 bis 35 Nanometer bei einer spezifischen Oberfläche nach BET zwischen 20 und 35 m$^2$/g. Daraus resultiert eine besondere Eignung dieser Oxide zur Herstellung von magnetischen Aufzeichnungsträgern mit sehr guter Tiefen- und Höhenaussteuerbarkeit bei guter Kopierdämpfung und geringem Betriebsrauschen. Die Herstellung der magnetischen Aufzeichnungsträger unter Verwendung eines nach dem erfindungsgemäßen Verfahren erhaltenen Gamma-Eisen(III)-oxides wird in bekannter Weise und mit üblicher Technologie durchgeführt.

Die Erfindung sei anhand der folgenden Beispiele und Vergleichsversuche näher erläutert.

Die spezifische Oberfläche der Pulver wird nach BET bestimmt und in m$^2$/g angegeben.

Die Bestimmung des Wertes der mittleren Kristallitgröße in den einzelnen Teilchen geschieht durch Röntgenbeugung. Mit einem Siemens-Zählrohrgoniometer wird an einer Pulverprobe das Reflexprofil, z.B. des (911)-Reflexes, vermessen. Abzüglich der Apparatekonstante wird daraus die mittlere Kristallitgröße abgeleitet. Als Strahlungsquelle dient z.B. die eisengefilterte K-$\alpha$-Linie des Cobalts.

Die magnetischen Pulverwerte werden durch Messung einer auf ein Stopfgewicht von $\rho$ = 1,2 g/cm$^3$ gebrachten Oxidprobe mit einem konventionellen Schwingmagnetometer bei 100 kA/m Meßfeldstärke bestimmt. Die Koerzitivfeldstärke (Hc) wird in kA/m, die spezifische Remanenz (Mr/$\rho$) und die spezifische Magnetisierung (Mm/$\rho$) werden in nTm$^3$/g angegeben.

Die Magnetbandproben werden gleichfalls mit einem Schwingmagnetometer bei einer Feldstärke von 100 kA/m gemessen. Angegeben wird die Koerzitivfeldstärke Hc in kA/m, die remanente Magnetisierung Mr in mT und der Richtfaktor (Rf), d.h. das Verhältnis der remanenten Magnetisierung längs der Vorzugsrichtung zu der Querrichtung dazu. Die Messung der Tiefen- und Höhenaussteuerbarkeit erfolgt nach DIN 45 512, Teil II, gegen das IEC 1-Bezugsband. Die Kopierdämpfung Kd und das Betriebsrauschen (RGA Ruhegeräuschabstand über A-Filter gemessen) ist auf das bereits erwähnte IEC 1-Bezugsband bezogen, welches gleich 0 dB gesetzt ist.

Beispiel 1

Durch einen in 3 Heizzonen unterteilten Drehrohrofen wird kontinuierlich, in einer Menge von 60 kg pro Stunde, nadelförmiger Lepidokrokit mit einer spezifischen Oberfläche nach BET von 32,5 m$^2$/g, einer durchschnittlichen Nadellänge von 0,5 $\mu$m bei einem Längen-zu-Dickenverhältnis von 10:1 gefördert, wobei in die Einlaufschnecke noch 20 Nm$^3$ Stickstoff pro Stunde eingeblasen werden.

Der eingesetzte Lepidokrokit ist an der Oberfläche der Nadeln mit 0,25 % Sn ausgerüstet. Gleichzeitig werden durch die sog. verschiebbare Lanze, deren Produktaustritt nach dem ersten Viertel der beheizten Länge des Drehrohrofens erfolgt, kontinuierlich 1,5 kg Stearinsäure pro Stunde und ein Wasserstoffstrom von 12 Nm$^3$ in der gleichen Zeit eingeleitet. Im Ofen wird das Produkt entsprechend der 3 Heizzonen auf 380, 450 und 520 $^{\circ}$C Produkttemperatur erhitzt. Nach einer auf 50 Minuten eingestellten Verweilzeit fällt das reduzierte Produkt, d.h. der Magnetit, über eine stickstoffgespülte Schleuse in einen zweiten Drehrohrofen, in welchem es bei einer mittleren Verweilzeit von 30 Minuten bei einer durchschnittlichen Produkttemperatur von 250 $^{\circ}$C mittels eines Luftstromes von 22 Nm$^3$ pro Stunde zu $\gamma$-Eisen(III)-oxid oxidiert wird. Die an dem so hergestellten Produkt gemessenen Werte sind in Tabelle 1 angegeben.

4

EP 0 200 985 B1

Beispiel 2

Es wird wie in Beispiel 1 beschrieben verfahren, jedoch ist die sog. verschiebbare Lanze so positioniert, daß der Austritt der Stearinsäure und des Wasserstoffstromes nach dem ersten Drittel der beheizten Länge des Drehrohrofens erfolgt. Die Meßergebnisse sind in Tabelle 1 angegeben.

Beispiel 3

Es wird wie in Beispiel 1 beschrieben verfahren, jedoch ist die sog. verschiebbare Lanze in der Mitte der beheizten Länge des Ofens positioniert, so daß dort Stearinsäure und Wasserstoff austreten. Die Meßergebnisse sind in Tabelle 1 angegeben.

Beispiel 4

Es wird wie in Beispiel 1 beschrieben verfahren, jedoch ist die sog. verschiebbare Lanze wie in Beispiel 3 in der Mitte der beheizten Länge des Ofens positioniert und durch diese Lanze werden 1,5 kg Stearinsäure in der Stunde ohne $H_2$-Einleitung zudosiert. Die Meßergebnisse sind in Tabelle 1 angegeben.

Beispiel 5

Es wird wie in Beispiel 3 beschrieben verfahren, jedoch werden anstelle von Stearinsäure 1,5 kg Ölsäure pro Stunde zudosiert. Die Meßergebnisse sind in Tabelle 1 angegeben.

Beispiel 6

Es wird wie in Beispiel 1 beschrieben verfahren, in die verschiebbare Lanze werden jedoch mit der Stearinsäure 20 Nm$^3$ pro Stunde eines Gasgemisches aus 33 Vol.% Wasserstoff und 66 Vol.% Stickstoff eingeleitet. Die Meßergebnisse sind in Tabelle 1 angegeben.

Beispiel 7

Es wird wie in Beispiel 1 beschrieben verfahren. Eine Reduktion erfolgt jedoch nur mit Wasserstoff, welcher in die verschiebbare Lanze in einer Menge von 22 Nm$^3$ pro Stunde eingeleitet wird. Die Meßergebnisse sind in Tabelle 1 angegeben.

Vergleichsversuche

Bei allen Vergleichsversuchen wird das entsprechende Ausgangsprodukt wie in den Beispielen 1 bis 6 eingesetzt.

Vergleichsversuch 1

Das Drehrohrofensystem besteht aus 3 Drehrohröfen, einem Entwässerungsofen mit einer Einleitung von 20 Nm$^3$ Stickstoff pro Stunde und einer Heizung, welche zu einer Produkttemperatur von 380°C führt, bei einer Verweilzeit des Produktes von 30 Minuten, einem Reduktionsofen in den 1,5 kg Stearinsäure und 20 Nm$^3$ Wasserstoff pro Stunde eingeleitet werden, dessen 2 Heizzonen Temperaturen von 450 bis 520°C aufweisen, bei einer Verweilzeit des Produktes von 40 Minuten und einem Oxidationsofen, dessen Heizung eine Produkttemperatur von 250°C bewirkt und einer Einleitung von 22 Nm$^3$ Luft pro Stunde bei einer Verweilzeit von 30 Minuten. Die Meßergebnisse sind in Tabelle 1 angegeben.

Vergleichsversuch 2

Unterschiedlich zu Vergleichsversuch 1 werden in den Reduktionsofen als reduzierendes Medium 22 Nm$^3$ Wasserstoff pro Stunde eingeleitet. Die Zudosierung von Stearinsäure entfällt. Die Meßergebnisse sind in Tabelle 1 angegeben.

Vergleichsversuche 3 bis 6

5

Die Ofenstraße besteht wie bei den Beispielen 1 bis 7 aus Reduktions-und Oxidationsofen. Am Reduktionsofen ist jedoch keine sogenannt verschiebbare Lanze angebracht.

Vergleichsversuch 3

Durch den Reduktionsofen werden bei Produkttemperaturen von 380°C, 450°C und 520°C im Ofen und einer Gesamtverweilzeit von 50 Minuten 60 kg Lepidokrokit, 1,5 kg Stearinsäure und 20 Nm³ Wasserstoff pro Stunde eingeleitet. Das reduzierte Produkt, d.h. der Magnetit fällt über eine stickstoffgespülte Schleuse in einen zweiten Drehrohrofen, worin es mittels eines Luftstromes von 22 Nm³ pro Stunde bei durchschnittlich 250°C und einer Verweilzeit von 30 Minuten zu $\gamma$-Eisen(III)-oxid oxidiert wird. Die Meßergebnisse sind in Tabelle 1 angegeben.

Vergleichsversuch 4

Durchführung wie Vergleichsversuch 3, jedoch werden 20 Nm³ eines Gasgemisches von Wasserstoff und Stickstoff im Volumenverhältnis 1:1 eingeleitet. Die Meßergebnisse sind in Tabelle 1 angegeben.

Vergleichsversuch 5

Durchführung wie Vergleichsversuch 3, jedoch werden 22 Nm³ Wasserstoff pro Stunde eingeleitet. Die zusätzliche Zugabe eines organischen Mediums entfällt. Die Meßergebnisse sind in Tabelle 1 angegeben.

Vergleichsversuch 6

Durchführung wie Vergleichsversuch 3. Als organische Komponente werden jedoch 1,5 kg Polyethylen mit einem Molekulargewicht von 3000 pro Stunde in den Reduktionsofen zudosiert. Die Meßergebnisse sind in Tabelle 1 angegeben.

**Tabelle 1**

| | Oberfläche nach BET [m²/g] | Kristallitgröße [nm] | Hc [kA/m] | Mr/$\varrho$ [nTm³/g] | Mm/$\varrho$ [nTm³/g] |
|---|---|---|---|---|---|
| Beispiel 1 | 20,8 | 300 | 28,0 | 40 | 81 |
| Beispiel 2 | 20,5 | 330 | 29,2 | 42 | 83 |
| Beispiel 3 | 20,0 | 350 | 31,0 | 43 | 84 |
| Beispiel 4 | 21,9 | 280 | 26,8 | 39 | 80 |
| Beispiel 5 | 20,7 | 355 | 31,4 | 43 | 84 |
| Beispiel 6 | 21,5 | 290 | 27,2 | 40 | 80 |
| Beispiel 7 | 17,6 | 380 | 27,9 | 45 | 83 |
| Vergl.-Vers. 1 | 19,2 | 340 | 29,5 | 40 | 76 |
| Vergl.-Vers. 2 | 16,8 | 370 | 27,2 | 44 | 80 |
| Vergl.-Vers. 3 | 20,2 | 280 | 27,9 | 39 | 79 |
| Vergl.-Vers. 4 | 22,1 | 250 | 26,3 | 38 | 78 |
| Vergl.-Vers. 5 | 16,4 | 380 | 27,0 | 45 | 81 |
| Vergl.-Vers. 6 | 18,5 | 320 | 28,6 | 43 | 77 |

Verarbeitung der Beispiele 1 bis 7 und Vergleichsversuche 1 bis 6 zu magnetischen Aufzeichnungsträgern

In eine Stahlkugelmühle mit einem Volumen von 10.000 Volumeneinheiten werden folgende Gewichtseinheiten zugegeben:
10.000 Teile Stahlkugeln vom Durchmesser 5 mm, 1300 Teile des $\gamma$-Fe$_2$O$_3$ wie in Tabelle 2 angegeben, 32 Teile eines Dispergiermittels auf Lecithinbasis, 6 Teile eines Siliconöles, 190 Teile eines handelsüblichen Polyesterurethans mit einem K-Wert von 60 (gemessen als 1 %ige Lösung in Tetrahydrofuran) isocyanatfrei, 90 Teile eines VC-Maleinsäure-ethylester-Copolymeren mit einem K-Wert von 59 (gemessen wie Polyesterurethan), sowie 32.000 Teile eines Gemisches aus 60 % Tetrahydrofuran und 40 % 1,4-Dioxan. Die Zugabe der Bindemittel erfolgt dabei als Lösung in dem genannten Lösemittelgemisch. Die Gesamtmischung wird in der Kugelmühle 5 Tage angerieben, bis eine ausreichende Oberflächenglätte entsprechend einer mikroskopischen Beurteilung erreicht wird. Die erhaltene Magnetdispersion wird durch eine Cellulose-Glasfaserschicht filtriert und anschließend mit einer geeigneten Beschichtungseinrichtung auf eine 12 µm dicke Polyethylenterephthalatfolie in der Dicke aufgegossen, daß nach Trocknung in einem Trockenkanal und Glättvorgang mit einem auf 70° C beheizten Mehrwalzenkalander auf einen Rv-Wert der Schicht von 0,10 µm, gemessen mit einem Meßgerät der Firma Perthen, Hannover, eine Schichtdicke von 4,5 µm verbleibt. Im Bereich der noch nassen Schicht des Trockenkanals befindet sich dabei ein über die gesamte Breite der Magnetschicht reichender Magnet, welcher die Magnetteilchen in Längsrichtu ng orientiert. Die so hergestellte Magnetfolie wird in Bänder von 3,81 mm Breite geschnitten.

Die entsprechenden Meßergebnisse, an den einzelnen Magnetbändern bestimmt, sind in Tabelle 2 angegeben.

Tabelle 2

| Magnetisches Material aus | HC [kA/m] | Mr [mT] | Rf | Aussteuerbarkeit bei | | RGA-Wert [dB] | Kd [dB] |
|---|---|---|---|---|---|---|---|
| | | | | 1 KHz [dB] | 10 KHz [dB] | | |
| Beispiel 1 | 27,2 | 176 | 3,2 | +1,5 | +0,1 | +0,9 | +0,5 |
| Beispiel 2 | 28,5 | 170 | 3,0 | +0,9 | +0,7 | +0,5 | +1,2 |
| Beispiel 3 | 29,8 | 168 | 2,9 | +0,5 | +1,2 | +0,2 | +2 |
| Beispiel 4 | 26,0 | 169 | 3,4 | +1,1 | -0,4 | +1,1 | 0 |
| Beispiel 5 | 30,0 | 166 | 3,0 | +0,3 | +1,4 | +0,8 | +1,8 |
| Beispiel 6 | 26,4 | 162 | 3,3 | +0,6 | -0,3 | +1,0 | +0,3 |
| Beispiel 7 | 27,5 | 160 | 2,6 | 0 | 0 | -1,0 | +2,9 |
| Vergleichsvers. 1 | 28,8 | 170 | 3,0 | +0,7 | +0,7 | ±0 | +1,4 |
| Vergleichsvers. 2 | 26,7 | 158 | 2,5 | -0,7 | -1,5 | -1,1 | +2,1 |
| Vergleichsvers. 3 | 26,9 | 165 | 2,9 | +0,6 | +0,2 | +0,4 | +0,3 |
| Vergleichsvers. 4 | 25,4 | 168 | 3,1 | +1,2 | -1,7 | +1,2 | -1,0 |
| Vergleichsvers. 5 | 26,2 | 152 | 2,4 | -1,0 | -2,0 | -1,5 | +3,1 |
| Vergleichsvers. 6 | 27,8 | 160 | 2,7 | -0,2 | 0 | -0,5 | +1,3 |

**Ansprüche**

1. Verfahren zur Herstellung von nadelförmigen ferrimagnetischen Gamma-Eisen(III)-oxiden durch Entwässerung von Eisen(III)-oxidhydroxiden zu $\alpha\text{-Fe}_2\text{O}_3$, anschließender Reduktion zu Magnetit bei Temperaturen zwischen 280 und 700° C mit mindestens einem Reduktionsmittel aus der Gruppe von in diesem Temperaturbereich in Gegenwart von Eisenoxiden zersetzlichen organischen Verbindungen, Wasserstoff und Wasserstoff-Inertgas-Gemischen und darauffolgender Oxidation des Magnetits bei Temperaturen zwischen 150 und 450° C mit sauerstoffhaltigen Gasen zu Gamma-Eisen(III)-oxid, dadurch gekennzeichnet, daß die Umwandlungsreaktion des Eisen(III)-oxidhydroxids zum Magnetit in nur einem kontinuierlichen Drehrohrofen durchgeführt wird, mit der Maßgabe, daß innerhalb des Drehrohrofens eine Trennung zwischen der Entwässerungsreaktion und der Reduktionsreaktion dadurch erfolgt, daß durch ein axial verschiebbares Dosierorgan die Zugabe des Reduktionsmittels an einer beliebigen Stelle entlang der Achse des Drehrohrofens vorgenommen wird.

2. Verfahren nach Anspruch 1, dadurch gekennzeichnet, daß die Beheizung des Drehrohrofens axial in unterschiedliche Heizzonen aufgeteilt ist.

3. Verfahren nach Anspruch 1 und 2, dadurch gekennzeichnet, daß das verschiebbare Dosierorgan im Drehrohrofen derart angeordnet ist, daß zwischen der Entwässerungszone für die Umwandlung des Eisen(III)-oxidhydroxids in $\alpha$-Fe$_2$O$_3$ und der Reduktionszone eine Temperaturbehandlung des $\alpha$-Fe$_2$O$_3$ erfolgt.

## Claims

1. A process for the preparation of an acicular ferrimagnetic gamma-iron(III) oxide by dehydrating an iron(III) oxide hydroxide to $\alpha$-Fe$_2$O$_3$, reducing the latter to magnetite at from 280 to 700° C with one or more reducing agents from the group consisting of organic compounds which decompose in this temperature range in the presence of iron oxides, and hydrogen and hydrogen/inert gas mixtures, and then oxidizing the magnetite to gamma-iron(III) oxide at from 150 to 450° C with an oxygen-containing gas, wherein the reaction to convert the iron(III) oxide hydroxide to magnetite is carried out in only one continuous rotary tubular furnace, with the proviso that the dehydration reaction and the reduction reaction are separated within the rotary tubular furnace by introducing the reducing agent at any point along the axis of the said furnace, through an axially displaceable metering means.

2. A process as claimed in claim 1, wherein the rotary tubular furnace is divided axially into different heating zones.

3. A process as claimed in claim 1 or 2, wherein the displaceable metering means is arranged in the rotary tubular furnace in such a way that the $\alpha$-Fe$_2$O$_3$ is subjected to a heat treatment between the dehydration zone for the conversion of the iron(III) oxide hydroxide to $\alpha$-Fe$_2$O$_3$ and the reduction zone.

## Revendications

1. Procédé de préparation d'oxydes de fer (III)-gamma, ferrimagnétiques, aciculaires, par déshydratation d'hydrates d'oxyde de fer (III) pour obtenir $\alpha$-Fe$_2$O$_3$, réduction à la suite en magnétite à des températures comprises entre 280 et 700 degrés C avec au moins un agent de réduction du groupe des composés organiques décomposables, en présence d'oxydes de fer, dans cette zone de température, de l'hydrogène et des mélanges de gaz inerte et hydrogène, et oxydation ensuite de la magnétite en oxyde de fer (III)-gamma à des températures comprises entre 180 et 450 degrés C avec des gaz à teneur en oxygène caractérisé par le fait que la réaction de transformation de l'hydrate d'oxyde de fer (III) en magnétite est effectuée dans un seul four à tube tournant, continu, sous condition qu'à l'intérieur du four à tube tournant, se produise une séparation entre la réaction de déshydratation et la réaction de réduction de sorte que l'addition de l'agent de réduction est opérée par un organe de dosage déplaçable ax ialement, en un point quelconque, le long de l'axe du four à tube tournant.

2. Procédé selon la revendication 1, caractérisé par le fait que le chauffage du four tournant est subdivisé axialement en zones de chauffage différentes.

3. Procédé selon la revendication 1 ou 2, caractérisé par le fait que l'organe de dosage déplaçable est disposé dans le four tournant de manière qu'entre la zone de déshydratation pour la transformation de l'hydrate d'oxyde de fer (III) en Fe$_2$O$_3$-$\alpha$ et la zone de réduction, s'opère un traitement en température du Fe$_2$O$_3$-$\alpha$.

## FIG.1